(19)

Europäisches
Patentamt
European
Patent Office
Office européen
des brevets

(11) **EP 2 532 163 B1**

(12) **EUROPEAN PATENT SPECIFICATION**

(45) Date of publication and mention
of the grant of the patent:
**11.12.2013 Bulletin 2013/50**

(51) Int Cl.:
*H04N 7/26* (2006.01)  *H04N 7/36* (2006.01)

(21) Application number: **11702217.8**

(22) Date of filing: **04.02.2011**

(86) International application number:
**PCT/EP2011/051642**

(87) International publication number:
**WO 2011/095583 (11.08.2011 Gazette 2011/32)**

(54) **IMPROVED METHOD AND APPARATUS FOR SUB-PIXEL INTERPOLATION**

VERBESSERTES VERFAHREN UND VORRICHTUNG FÜR SUBPIXELINTERPOLATION

PROCÉDÉ ET APPAREIL AMÉLIORÉS POUR INTERPOLATION DE SOUS-PIXELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2010 US 301659 P**

(43) Date of publication of application:
**12.12.2012 Bulletin 2012/50**

(73) Proprietor: **Telefonaktiebolaget LM Ericsson
(publ)
164 83 Stockholm (SE)**

(72) Inventors:
• **ANDERSSON, Kenneth
S-164 80 Stockholm (SE)**
• **SJOBERG, Rickard
S-164 80 Stockholm (SE)**
• **WU, Zhuangfei
S-164 80 Stockholm (SE)**

(74) Representative: **Barrett, Peter Andrew John et al
Ericsson Limited
Patent Unit Optical Networks
Unit 4 Midleton Gate
Guildford Business Park
Guildford, Surrey GU2 8SG (GB)**

(56) References cited:
**WO-A2-02/080569        DE-A1- 19 644 769
US-A1- 2010 284 464**

• **YONG WANG ET AL: "Complexity Adaptive H.264
Encoding for Light Weight Streams",
ACOUSTICS, SPEECH AND SIGNAL
PROCESSING, 2006. ICASSP 2006
PROCEEDINGS . 2006 IEEE INTERNATIONAL
CONFERENCE ON TOULOUSE, FRANCE 14-19
MAY 2006, PISCATAWAY, NJ, USA,IEEE,
PISCATAWAY, NJ, USA, 14 May 2006
(2006-05-14), page II, XP031386332, DOI: DOI:
10.1109/ICASSP.2006.1660270 ISBN:
978-1-4244-0469-8**
• **HALLAPURO: "4-tap Filter for Bi-predicted
Macroblocks", 1. AVC MEETING; 13-11-1990 -
16-11-1990; THE HAGUE ; (CCITT SGXVEXPERT
GROUP FOR ATM VIDEO CODING), XX, XX, no.
JVT-D029, 26 July 2002 (2002-07-26),
XP030005303,**
• **KEMAN YU ET AL: "Half-pixel Motion Estimation
Bypass Based on a Linear Model", 24. PICTURE
CODING SYMPOSIUM;15-12-2004 - 17-12-2004;
SAN FRANSISCO,, 15 December 2004
(2004-12-15), XP030080114,**
• **SHUN-ICHI SEKIGUCHI ET AL: "4:4:4 video
coding performance with adaptive motion vector
coding", 83. MPEG MEETING; 14-1-2008 -
18-1-2008; ANTALYA; (MOTION PICTURE
EXPERT GROUP OR ISO/IEC JTC1/SC29/WG11),,
9 January 2008 (2008-01-09), XP030043782,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present application relates to a method of decoding an encoded video stream, a method of encoding a video stream, a video decoding apparatus, a video encoding apparatus, and a computer-readable medium.

**Background**

H.264, ITU-T recommendation (03/2010); SERIES H: AUDIOVISUAL AND MULTIMEDIA SYSTEMS; Infrastructure of audiovisual services - Coding of moving video; Advanced video coding for generic audiovisual services; is an international standard which defines H.264 video coding. H.264 is an evolution of the existing video coding standards (H.261, H.262, and H.263) and it was developed in response to the growing need for higher compression of moving pictures for various applications such as videoconferencing, digital storage media, television broadcasting, Internet streaming, and communication. It is also designed to enable the use of the coded video representation in a flexible manner for a wide variety of network environments. The use of H.264 allows motion video to be manipulated as a form of computer data and to be stored on various storage media, transmitted and received over existing and future networks and distributed on existing and future broadcasting channels.

In known video coding standards such as H.264, temporal redundancy in picture information of successive video frames is exploited by prediction of displaced blocks from a previously encoded or decoded picture or frame. This prediction is often referred to as motion compensated prediction, where the motion vector defines the spatial displacement of a pixel or group of pixels from one picture to another. According to the H.264 standard, the motion vector may have quarter pixel accuracy. This means that the motion vector can reference a block (in another picture) at a spatial displacement of, say, 16.75 pixels in a horizontal direction and 11.25 pixels in a vertical direction. The quarter-pixels (sometimes referred to as Qpels) are sub-pixels that lie between the integer pixels at one quarter intervals. Pixel and sub-pixel values may be defined in terms of luminance and chroma, or red, green and blue intensity values, or any other suitable colour space definition. Sub-pixel values are calculated for a particular picture using an interpolation filter. The interpolation filter is an equation which defines the value of a sub-pixel using the nearby integer pixel values.

During encoding, all sub-pixel values are calculated to allow for the searching of similar blocks of pixels between pictures in order to find motion vectors. During decoding, a sub-pixel value for a referred picture is only calculated when a motion vector for a picture currently being decoded is identified which points to that sub-pixel value. The decoder may receive the motion vector. Alternatively, the decoder may receive an indication of the motion vector. The indication of the motion vector may comprise a reference to a motion vector candidate and a difference vector such that the required motion vector can be derived by summing the motion vector candidate and the difference vector. The indication of the motion vector may also comprise which previously decoded picture to reference. Alternatively, the decoder may receive an indication of which previously decoded picture to reference for a particular set of motion vectors.

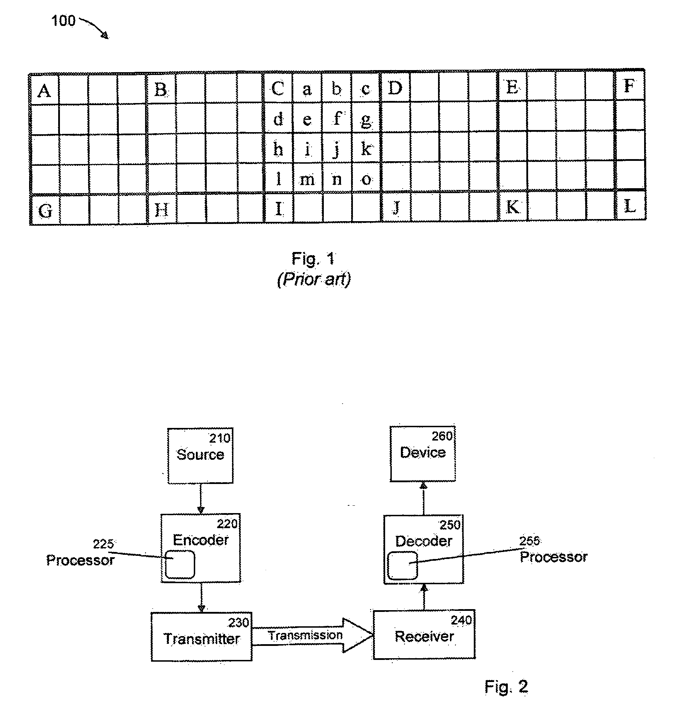

Figure 1 shows a section of a picture 100 and shows 12 integer pixels A, B, C, ... L. Each integer pixel is shown as having 15 sub-pixels associated therewith. The 15 sub-pixels associated with integer pixel C are labeled a, b, c, ... o. By way of example, the value of sub-pixel b may be calculated as a weighted average of six nearby integer pixels according to:

$$b = [\ A - 5B + 20C + 20D - 5E + F\ ]\ ^* \ [1/32]$$

This interpolation filter is referred to as a six-tap filter because it uses the values of six other pixel positions. Sub-pixel positions a and c may be calculated using similar filters but having different weightings to allow for their different positions. Sub-pixels a, b and c are calculated from integer pixel values having the same vertical coordinate as themselves, these sub-pixels can be said to only require filtering in the horizontal direction. Similarly, sub-pixels d, h and I may be obtained from interpolation filters having taps of integer pixel values with a common horizontal coordinate to themselves.

Sub-pixel positions e, f, g, i, j, k, m, n and o require filtering in both the horizontal and the vertical direction, which makes these sub-pixel positions more computationally costly to calculate. The calculation of these sub-pixel values can require the calculation of multiple nearby sub-pixels in order to provide values for taps of the interpolation filter for these pixel positions.

Sub-pixel value interpolation is a computationally intensive task and consumes a significant proportion of the processor resources in a video decoder. This leads to increased cost of implementation, increased power consumption, decreased battery life, etc.

Accordingly, an improved method and apparatus for sub-pixel interpolation is required.

## Summary

According to the method and apparatus disclosed herein, a mask is applied to a picture being referenced, the mask disallowing certain sub-pixel positions, preventing the application of an interpolation filter for that sub-pixel. The mask reduces the number of sub-pixel positions for which interpolation must be performed and thus reduces the amount of calculation required in the decoder. The mask can be selected to exclude the more complex sub-pixel positions, for example those that require interpolation in both a vertical and horizontal direction. Thus there is provided an improved trade-off between computational efficiency and decoded video quality.

There is further provided a method for decoding an encoded video stream. The method comprises receiving an indication of a motion vector for a current picture, the motion vector referring to a previously decoded picture. The method also comprises applying a mask, the mask defining a subset of sub-pixel positions of the previously decoded picture which may be referenced by the motion vector for the current picture. The method further comprises identifying at least one pixel value for the current picture by referring to the value of at least one pixel in an allowed pixel position of the previously decoded picture.

By eliminating interpolation for certain sub-pixel positions the amount of calculation required during decoding is reduced. Advantageously, the most computational intensive sub-pixel positions may be eliminated giving a significant reduction in decoder computation with a reduced impact on decoded video quality.

The mask may be applied to the previously decoded picture. The mask may allow a subset of sub-pixel positions of the previously decoded picture to be referred to. The mask may define a subset of sub-pixel positions that are allowed to be referenced.

The mask may be dependent upon the quality of the previously decoded picture. Interpolated sub-pixel values in low quality reference pictures give less of an improvement in decoded video quality than interpolated sub-pixel values in high quality reference pictures. Accordingly, determining the allowed sub-pixel positions according to the quality of the reference picture allows for a reduction in decoder computation with a minimal impact on decoded video quality.

There is further provided a method of decoding an encoded video stream. The method comprises receiving an indication of a motion vector for a current picture, the motion vector referring to a previously decoded picture. The method also comprises identifying at least one pixel value for the current picture by referring to at least one sub-pixel in the previously decoded picture as indicated by the motion vector. The method further comprises applying an interpolation filter to the previously decoded picture to identify a value of the at least one referred to sub-pixel, wherein the interpolation filter applied is dependent upon the quality of the previously decoded picture.

In a high quality reference frame, the sub-pixel value interpolation is advantageously calculated taking into account a high number of integer pixel values, such as six integer pixel values in a six-tap interpolation filter. For a low quality reference frame, a sufficient sub-pixel value interpolation may be calculated taking into account a lower number of integer pixel values, such as two integer pixel values in a two-tap interpolation filter.

There is further provided a method of encoding a video stream. The method comprises identifying a motion vector for a current picture, the motion vector referring to a previously encoded picture. The method also comprises applying a mask, the mask defining a subset of sub-pixel positions of the previously decoded picture which may be referenced by the motion vector for the current picture. The method further comprises modifying the motion vector to identify at least one pixel value for the current picture by referring to the value of at least one pixel in an allowed pixel position of the previously decoded picture.

By eliminating interpolation for certain sub-pixel positions in the encoded video stream the amount of calculation required during decoding is reduced.

There is further provided a video decoding apparatus. The apparatus comprises a receiver arranged to receive an indication of a motion vector for a current picture, the motion vector referring to a previously decoded picture. The apparatus also comprises a processor arranged to apply a mask, the mask defining a subset of sub-pixel positions of the previously decoded picture which may be referenced by the motion vector for the current picture. The processor is further arranged to identify at least one pixel value for the current picture by referring to the value of at least one pixel in an allowed pixel position of the previously decoded picture.

By eliminating interpolation for certain sub-pixel positions the amount of calculation required during decoding is reduced.

There is further provided a video encoding apparatus comprising a processor. The processor is arranged to identify a motion vector for a current picture, the motion vector referring to a previously encoded picture. The processor is also arranged to apply a mask, the mask defining a subset of sub-pixel positions of the previously decoded picture which may be referenced by the motion vector for the current picture. The processor is further arranged to modify the motion vector to identify at least one pixel value for the current picture by referring to the value of at least one pixel in an allowed pixel position of the previously decoded picture.

By eliminating interpolation for certain sub-pixel positions in the encoded video stream the amount of calculation required during decoding is reduced.

There is further provided a computer-readable medium, carrying instructions, which, when executed by computer logic, causes said computer logic to carry out any of the methods defined herein.

There is further provided a method of decoding an encoded video stream, the method comprising: receiving an indication of a motion vector for a current picture, the motion vector referring to a previously decoded picture; applying a mask, the mask defining a subset of sub-pixel positions of the previously decoded picture which may be referenced by the motion vector for the current picture; if the pixel indicated by the motion vector is in an allowed pixel position, then identifying a pixel value for the current picture by referring to the indicated sub-pixel value in the previously decoded picture; and if the pixel indicated by the motion vector is in a disallowed pixel position, then identifying a pixel value for the current picture by referring to an alternative allowed pixel position.

The equations used to calculate sub-pixel values from integer pixel values are referred to herein as filters or interpolation filters. Each image that comprises a frame of a video sequence is referred to herein as a picture; these may also be referred to as frames in the art. The pattern of allowed sub-pixel positions in a picture which may be referred to by a motion vector related to another picture is referred to herein as a mask.

## Brief description of the drawings

An improved method and apparatus for sub-pixel interpolation will now be described, by way of example only, with reference to the accompanying drawings, in which:

Figure 1 shows a section of a picture having integer pixels and sub-pixels;
Figure 2 shows a video coding and transmission system
Figure 3 illustrates a group of pictures which is a sequence of frames in a video sequence;
Figure 4 shows an example arrangement where different masks are used for referencing different pictures within a group of pictures;
Figure 5 shows alternative embodiments of an example mask; and
Figure 6 is a flow chart illustrating a method as disclosed herein.

## Detailed description

According to a first embodiment, in a video decoding system a mask is applied to a picture being referenced, the mask disallowing certain sub-pixel positions, preventing the application of an interpolation filter for that sub-pixel. The mask reduces the number of sub-pixel positions for which interpolation must be performed and thus reduces the amount of calculation required in the decoder. The mask can be selected to exclude the more complex sub-pixel positions, for example those that require interpolation in both a vertical and horizontal direction, to provide an improved trade-off between computational efficiency and decoded video quality.

According to a further embodiment, different masks are selected for different reference pictures. Any previously decoded picture may serve as a reference picture to which a motion vector refers. These pictures can be encoded in different ways and the image quality of any particular received picture varies according to how well it was encoded. According to a method and apparatus disclosed herein, a mask is selected to be applied to a picture being referenced, wherein the number of sub-pixel positions allowed by the mask is proportional to the quality of the reference picture. A high quality reference picture is allowed to be referenced to any sub-pixel position, whereas a low quality reference picture is allowed to be referenced to only a limited number of sub-pixel positions. In this way, the amount of calculation required for sub-pixel interpolation is reduced with minimal impact on video quality.

Figure 2 shows a video coding system wherein a video signal from a source 210 is ultimately delivered to a device 260. The video signal from source 210 is passed through an encoder 220 containing a processor 225. The encoder 220 applies an encoding process to the video signal to create an encoded video stream. The encoded video stream is sent to a transmitter 230 where it may receive further processing, such as packetization, prior to transmission. A receiver 240 receives the transmitted encoded video stream and passes this to a decoder 250. Decoder 250 contains a processor 255, which is employed in decoding the encoded video stream. The decoder 250 outputs a decoded video stream to the device 260.

Pictures may be coded as: I-frames (intracoded frames - without reference to any other pictures), P-frames (predicted frames - with reference to the previous picture), or B-frames (bi-predicted frame - with reference to two other pictures, for example both a previous and subsequent picture). It should be noted that B-frames also can refer to only previous pictures as needed in some applications to obtain coding with low delay.

A B-frame is a picture obtained using bi-prediction. Bi-predictions are made with references to two other previously decoded pictures. The two other pictures may be: both preceding the current picture in the series of frames; both following the current picture in the series of frames; or a picture preceding the current picture in the series of frames and a picture following the current picture in the series of frames. It should be noted that the order of picture coding does not necessarily follow the order of pictures in the series of frames. In bi-prediction, because the predicted picture is composed from two reference pictures, twice the number of sub-pixels could be referenced. This means that a motion vector is more likely to refer to sub-pixels whose values have not yet been interpolated and thus more sub-pixel interpolation is required. Bi-prediction has therefore approximately twice the complexity in terms of filtering operations such as additions, multiplications and shifts compared to single picture prediction.

H.264 has B-skip and B-direct modes where the motion vector is predicted from the neighboring macroblocks without any coding of the motion prediction error. This means that if the predicted motions both have sub-pixel positions in both directions the skip needs to do sub-pixel interpolation twice. H.264 also has a feature called hierarchical B coding. In hierarchical B coding some B-frames are derived from references to at least one other B-frame, using either single picture prediction or bi-prediction.

In these referencing schemes the quality of the pictures varies with position within the group of pictures, and type of picture. Each reference to another picture introduces some minor error. Some pictures are composed using references to pictures which are themselves composed using references to other pictures and for these pictures minor errors accumulate and the quality of the picture decreases. For example, an I-frame gives a high quality picture as this is essentially a compressed still image; no errors are introduced from approximate references to other pictures. A P-frame gives a lower quality picture than an I-frame. A B-frame gives a lower quality picture than a P-frame. Subsequent hierarchical B-frames have lower quality still than a B-frame derived from references to only I-frames and P-frames.

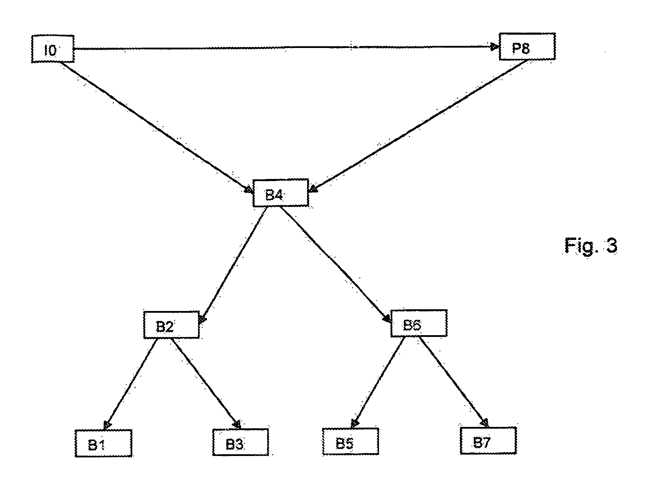

Figure 3 illustrates a group of pictures which is a sequence of frames in a video sequence. The arrows in figure 2 illustrate an example of the references to other frames from which a frame is derived. An I-frame 10 is coded without reference to any other frame. A P-frame P8 is derived from references to 10 only. A B-frame B4 is derived from references to both 10 and P8. Further B-frames B2 and B6 are derived using single picture prediction from B4. Further still B-frames B1, B3 and B5, B7 are derived using single picture prediction from B2 and B6 respectively. Pictures B1, B2, B3, B5, B6, and B7 are examples of hierarchical B-coding. The pictures are arranged in a sequence of video frames in the following order: I0, B1, B2, B3, B4, B5, B6, B7, P8.

Any previously decoded picture may serve as a reference picture to which a motion vector points. These pictures can be encoded in different ways and the image quality of any particular received picture varies according to how it was encoded. When a reference is made to another picture by way of a motion vector the motion vector may point to a sub-pixel. Where a reference is made to a sub-pixel in a referenced picture that sub-pixel must be calculated using an interpolation filter. For low quality pictures such as B2 in figure 1, which is derived from at least two iterations of references to other pictures the accumulated integer pixel error will mean that the interpolated sub-pixel values derived from the integer pixels will be of less use compared to say, the interpolated sub-pixel values derived in I0.

Quantization Parameters (QP) are used to determine the level of quantization of transform coefficients. A larger QP means a larger quantization step size meaning a lower resolution scale of transform coefficients and so a lower picture quality. In the example of figure 1, picture 10 corresponds to an intra coded frame having a quantization parameter of, say, QP. Typically finer grain quantization is deployed for such images than for temporally predicted images. P8 is a frame encoded using single picture prediction and will have a quantization parameter of QP+1, meaning that the quantization of P8 is more coarse than for 10. B4 will have quantization parameter QP+2; B2 and B6 are encoded with quantization parameter QP+3; and B1, B3, B5 and B7 are encoded with QP+4. That is, the lower hierarchical levels have increased quantization parameters, and therefore increasingly coarse quantization. Accordingly, the value of quantization parameter for a reference frame may be used as in indication of the quality of that reference frame. In coding with low delay the QP can either be fixed for all inter predictive frames or varied periodically so that every second, every third or every fourth frame has a lower QP than the other frames.

According to a method and apparatus disclosed herein, a mask is applied to a picture being referenced, the mask disallowing certain sub-pixel positions, preventing the application of an interpolation filter for that sub-pixel.

The masks are defined in the decoder. Different masks may be used for different levels of reference picture quality. Each mask indicates, for a particular reference picture quality, which sub-pixel positions may be used as references for subsequent pictures. This allows the complexity of bi-prediction to be controlled dependent upon the reference picture. Reference pictures of higher quality thus have a different sub-pixel mask compared to reference frames of lower quality.

It is advantageous to allow for many sub-pixel positions in a high quality reference picture in order to use the sharpness of the high quality reference picture in current picture prediction. Low quality reference pictures contain less detail and thus a sufficient reference can be made with fewer sub-pixel positions. By masking away sub-pixel positions that have the highest calculation complexity the interpolation cost of the low quality reference frames can be reduced.

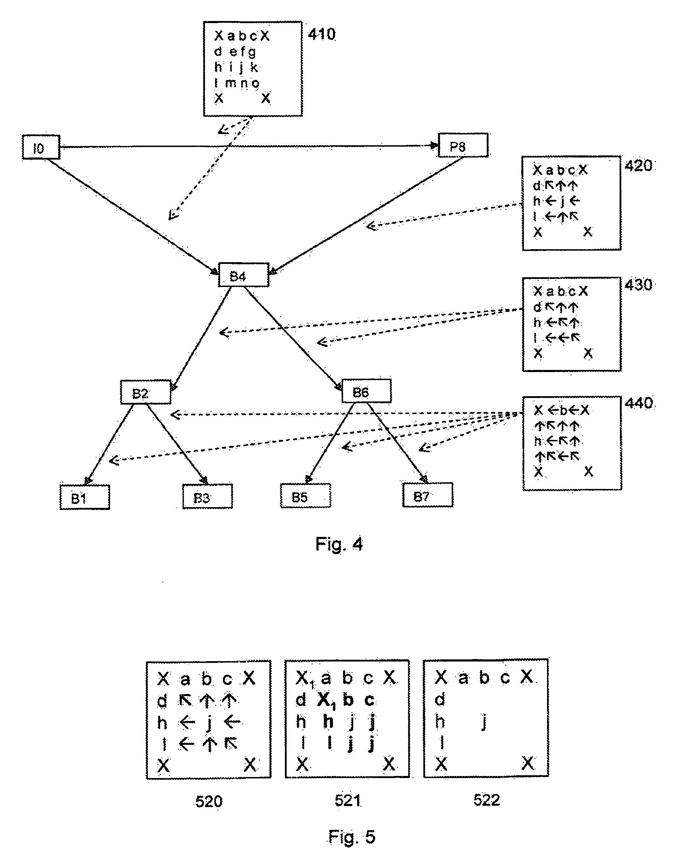

Figure 4 shows an example arrangement where masks 410, 420, 430, 440 used for each reference are illustrated for a group of pictures similar to that described with reference to figure 3. A reference to an I-frame such as I0 may refer to all 15 sub-pixel positions because this is a high quality frame. A reference to a P-frame such as P8 may refer to only seven sub-pixel positions: the horizontal interpolation only sub-pixel positions a, b and c; the vertical interpolation only sub-pixel positions d, h and I; and central half-pixel position j. A reference to a first level B-frame such as B4 may refer to only 6 sub-pixel positions: the horizontal interpolation only sub-pixel positions a, b and c; and the vertical interpolation only sub-pixel positions d, h and I. A reference to a second level B-frame such as B2 or B6 may refer to only 2 sub-pixel positions: the horizontal interpolation only half-pixel position b; and the vertical only half-pixel position h.

The masks 410, 420, 430, 440 in figure 4 are shown including arrows at the disallowed sub-pixel positions. These arrows indicate which pixel value (either integer pixel or allowed sub-pixel) is used in place of the disallowed sub-pixel position. These arrows are not an essential feature of the masks, figure 5 shows two alternative embodiments of the mask. In figure 5, mask 520 is identical to mask 520 including arrows, reproduced for reference. Mask 521 achieves the same result as mask 520, but does so by, in place of the disallowed sub-pixel positions, indicating the alternative pixel value (either integer pixel or allowed sub-pixel) to be used. In mask 521 the disallowed sub-pixel positions are shown with the alternate pixel position value they should take in bold. A further alternative embodiment is illustrated by mask 522 wherein only allowed sub-pixel positions are indicated. A decoder that implements mask 522 includes rules to determine which alternative pixel value (either integer pixel or allowed sub-pixel) to take when a particular sub-pixel position is disallowed. Such a rule may be as simple as the nearest allowable neighbor.

A picture obtained through bi-prediction using appropriate masks for high and low quality reference frames can maintain much of the coding efficiency and video quality of a system that uses no masking but at a significantly lower interpolation cost at the decoder.

It should be noted that the masking of sub-pixel positions may also be deployed in an encoder. This is done by allowing an encoder to select motion vectors which reference a particular picture only at sub-pixel positions according to a mask determined according to the quality of the referenced picture as described above with reference to a decoder.

In a further alternative, the encoder may transmit the different masks as describe above to a decoder for the decoder to implement should it need to reduce computational load and/or improve coding efficiency. The encoder can transmit masks as a 16 bit stream in Sequence Parameter Set or Picture Parameter Set. Of course, instead of transmitting the mask, the encoder may transmit a flag indicating that a mask should be used.

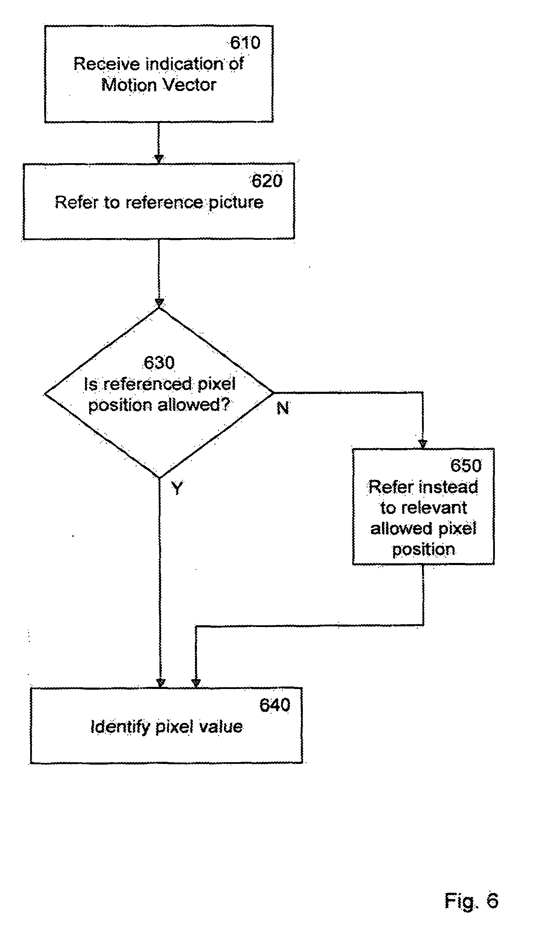

Figure 6 is a flow chart illustrating a method as disclosed herein. At 610, an indication of a motion vector is received, the motion vector identifying a pixel position (integer-pixel or sub-pixel) in a previously decoded picture. At 620, the particular previously decoded picture (the reference picture) is referred to. At 630 a determination is made as to whether the referred to pixel position in the referenced picture is an allowed position. This is determined by application of a mask, the mask may be dependent upon the quality of the previously decoded picture. If the referred to pixel position is allowed in the previously decoded picture then at 640 the pixel value of the identified pixel position is identified and used in the current picture. Alternatively, if the referred to pixel position is not allowed in the previously decoded picture then at 650 an appropriate different pixel position that is allowed is identified. Then at 640 the pixel value of that pixel is identified and used in the current picture.

In another embodiment the processing burden for calculating sub-pixel values is further reduced by using less complex filters for all allowed sub-pixels in a lower quality picture that is being referenced. As explained above, the value of sub-pixel b may be calculated as a weighted average of six nearby integer pixels according to:

$$b = [\, A - 5B + 20C + 20D - 5E + F \,] * [1/32] \, .$$

With reference to figure 3, such an interpolation filter may be used in connection with masks 310 and 320 referencing I-frames and P-frames respectively. A simpler interpolation filter may be calculated as a weighted average of only two nearby integer pixels, such as:

$$b = [\, C + D \,] * [1/2] \, .$$

According to the method and apparatus disclosed herein, at least one interpolation filter is applied to a picture being referenced, the interpolation filter giving a value for a sub-pixel position based on nearby integer pixel values. Different interpolation filters are applied according to the quality of the picture being referenced such that the number of integer pixel values referenced by the interpolation filter is proportional to the quality of the reference picture. An interpolation filter with a greater number of taps is used for a high quality reference picture as compared to an interpolation filter used for a low quality reference picture. In this way, the amount of calculation required for sub-pixel interpolation is reduced with minimal impact on video quality.

The sub-pixel mask and/or interpolation filter applied to a referenced picture may be determined according to the quality of the referenced picture. The picture quality may be determined from the prediction modes used to create it (e.g. I-frame, P-frame, B-frame, secondary B-frame etc.). The quality of each picture may be indicated in the stream by a sequence parameter at the start of a video bitstream, or by a parameter for each frame or slice in the video bitstream.

Further still, the sub-pixel mask and/or interpolation filter applied by a decoder may be determined by the decoder itself dependent upon available processing resources. Such an adaptive system allows greater flexibility of resource management in a decoder or a multi-function device incorporating a video decoder.

It will be apparent to the skilled person that the exact order and content of the actions carried out in the method described herein may be altered according to the requirements of a particular set of execution parameters. Accordingly, the order in which actions are described and/or claimed is not to be construed as a strict limitation on order in which actions are to be performed.

The sub-pixels of the examples described herein have been described in the context of quarter pixels. It should be noted that these examples are in no way limiting of the arrangements to which the disclosed method and apparatus may be applied. For example, the principles disdosed herein can also be applied to a 1/8$^{th}$ sub-pixels (eighth-pixels, wherein each integer pixel has 63 associated sub-pixel positions arranged 8 by 8) or any other pixel subdivision scheme. Further, masks may be provided which limit references to: only half-pixels; only half-pixels and quarter-pixels; and half-pixels, quarter-pixels and eighth-pixels.

Further, while examples have been given in the context of particular video coding standards, these examples are not intended to be the limit of the communications standards to which the disclosed method and apparatus may be applied. For example, while specific examples have been given in the context of H.264/AVC, the principles disclosed herein can also be applied to an MPEG-4 ASP (advanced simple profile) system, HEVC (High Efficiency Video Coding) and indeed any video coding system which uses interpolated sub-pixel values.

## Claims

1. A method of decoding an encoded video stream, the method comprising:

   receiving a motion vector for a current picture, the motion vector referring to a previously decoded picture;
   applying a mask, the mask defining a subset of sub-pixel positions of the previously decoded picture which may be referenced by the motion vector; identifying at least one pixel value for the current picture by referring to the value of at least one pixel in an allowed pixel position of the previously decoded picture;
   wherein the mask is dependent upon the quality of the previously decoded picture such that a mask for a higher quality previously decoded picture has more allowed sub-pixel positions than a mask for a lower quality previously decoded picture, wherein the higher quality previously decoded picture is of higher quality than the lower quality previously decoded picture.

2. The method of claim 1, wherein the quality is determined by the type of the previously decoded picture.

3. The method of claim 2, wherein the type of the previously decoded picture is one of an I-frame, a P-frame, and a B-frame

4. The method of any preceding claim, wherein the mask also indicates which pixel or sub-pixel position should be used in place of a disallowed sub-pixel position.

5. The method of any preceding claim, wherein the sub-pixel value in the previously decoded picture that is referred to by a motion vector for the current picture is calculated using an interpolation filter when the sub-pixel is first referred to by a motion vector.

6. The method of any preceding claim, wherein the identification of at least one pixel value for the current picture is performed for an integer pixel value.

7. The method of any preceding claim, wherein the mask is dependent upon the quantization parameter of the previously decoded picture.

8. The method of any preceding claim further comprising applying an interpolation filter to the previously decoded picture to identify a value of at least one referred to sub-pixel, the interpolation filter dependent upon the quality of the previously decoded picture.

9. A method of decoding an encoded video stream, the method comprising:

receiving a motion vector for a current picture, the motion vector referring to a previously decoded picture;
identifying at least one pixel value for the current picture by referring to at least one sub-pixel in the previously decoded picture as indicated by the motion vector;
applying an interpolation filter to the previously decoded picture to identify a value of the at least one referred to sub-pixel, wherein the interpolation filter applied is dependent upon the quality of the previously decoded picture;
wherein an interpolation filter for a higher quality previously decoded picture has more taps than an interpolation filter for a lower quality previously decoded picture, wherein the higher quality previously decoded picture is of higher quality than the lower quality previously decoded picture.

10. The method of claim 9, wherein the quality of the previously decoded picture is determined by the type of the previously decoded picture.

11. The method of claim 10, wherein the type of the previously decoded picture is one of an I-frame, a P-frame, and a B-frame.

12. A method of encoding a video stream, the method comprising:

identifying a motion vector for a current picture, the motion vector referring to a previously encoded picture;
applying a mask, the mask defining a subset of sub-pixel positions of the previously decoded picture which may be referenced by the motion vector for the current picture; and
identifying at least one pixel value for the current picture by referring to the value of at least one pixel in an allowed pixel position of the previously decoded picture;
wherein the mask is dependent upon the quality of the previously decoded picture such that a mask for a higher quality previously decoded picture has more allowed sub-pixel positions than a mask for a lower quality previously decoded picture, wherein the higher quality previously decoded picture is of higher quality than the lower quality previously decoded picture.

13. A video decoding apparatus comprising:

a receiver arranged to receive a motion vector for a current picture, the motion vector referring to a previously decoded picture;
a processor arranged to apply a mask to the previously decoded picture, the mask allowing a subset of sub-pixel positions of the previously decoded picture which may be referenced by the motion vector for the current picture;
wherein the processor is further arranged to identify at least one pixel value for the current picture by referring to the value of at least one pixel in an allowed pixel position of the previously decoded picture;
wherein the mask is dependent upon the quality of the previously decoded picture such that a mask for a higher quality previously decoded picture has more allowed sub-pixel positions than a mask for a lower quality previously decoded picture, wherein the higher quality previously decoded picture is of higher quality than the lower quality previously decoded picture.

14. A video encoding apparatus comprising a processor arranged to:

identify a motion vector for a current picture, the motion vector referring to a previously encoded picture;
apply a mask to the previously decoded picture, the mask allowing a subset of sub-pixel positions of the previously decoded picture which may be referenced by the motion vector for the current picture; and
identify at least one pixel value for the current picture by referring to the value of at least one pixel in an allowed pixel position of the previously decoded picture;
wherein the mask is dependent upon the quality of the previously decoded picture such that a mask for a higher quality previously decoded picture has more allowed sub-pixel positions than a mask for a lower quality previously decoded picture, wherein the higher quality previously decoded picture is of higher quality than the lower quality previously decoded picture.

15. A computer-readable medium, carrying instructions, which, when executed by computer logic, causes said computer logic to carry out any of the methods defined by claims 1 to 12.

**Patentansprüche**

1.  Verfahren zur Decodierung eines codierten Videostroms, wobei das Verfahren umfasst:

    Empfangen eines Bewegungsvektors für ein aktuelles Bild, wobei der Bewegungsvektor auf ein vorher decodiertes Bild verweist;

    Anwenden einer Maske, wobei die Maske einen Teilsatz von Subpixelpositionen des vorher decodierten Bildes definiert, auf welchen durch den Bewegungsvektor verwiesen werden kann;

    Identifizieren mindestens eines Pixelwerts für das aktuelle Bild durch Verweisen auf den Wert mindestens eines Pixels in einer zulässigen Pixelposition des vorher decodierten Bildes;

    wobei die Maske von der Qualität des vorher decodierten Bildes abhängig ist, derart dass eine Maske für ein vorher decodiertes Bild höherer Qualität mehr zulässige Subpixelpositionen als eine Maske für ein vorher decodiertes Bild niedrigerer Qualität aufweist, wobei das vorher decodierte Bild höherer Qualität von höherer Qualität als das vorher decodierte Bild niedrigerer Qualität ist.

2.  Verfahren nach Anspruch 1, wobei die Qualität durch den Typ des vorher decodierten Bildes bestimmt wird.

3.  Verfahren nach Anspruch 2, wobei der Typ des vorher decodierten Bildes eines von einem I-Bild, einem P-Bild und einem B-Bild ist.

4.  Verfahren nach einem der vorhergehenden Ansprüche, wobei die Maske außerdem anzeigt, welche Pixel- oder Subpixelposition anstelle einer nicht zulässigen Subpixelposition verwendet werden sollte.

5.  Verfahren nach einem der vorhergehenden Ansprüche, wobei der Subpixelwert im vorher decodierten Bild, auf das durch einen Bewegungsvektor für das aktuelle Bild verwiesen wird, unter Verwendung eines Interpolationsfilters berechnet wird, wenn auf das Subpixel durch einen Bewegungsvektor zuerst verwiesen wird.

6.  Verfahren nach einem der vorhergehenden Ansprüche, wobei die Identifizierung mindestens eines Pixelwerts für das aktuelle Bild für einen ganzzahligen Pixelwert erfolgt.

7.  Verfahren nach einem der vorhergehenden Ansprüche, wobei die Maske vom Quantisierungsparameter des vorher decodierten Bildes abhängig ist.

8.  Verfahren nach einem der vorhergehenden Ansprüche, ferner umfassend ein Anwenden eines Interpolationsfilters auf das vorher decodierte Bild, um einen Wert mindestens eines Subpixels zu identifizieren, auf das verwiesen wird, wobei das Interpolationsfilter von der Qualität des vorher decodierten Bildes abhängig ist.

9.  Verfahren zur Decodierung eines codierten Videostroms, wobei das Verfahren umfasst:

    Empfangen eines Bewegungsvektors für ein aktuelles Bild, wobei der Bewegungsvektor auf ein vorher decodiertes Bild verweist;

    Identifizieren mindestens eines Pixelwerts für das aktuelle Bild durch Verweisen auf mindestens ein Subpixel im vorher decodierten Bild, wie durch den Bewegungsvektor angezeigt;

    Anwenden eines Interpolationsfilters auf das vorher decodierte Bild, um einen Wert des mindestens einen Subpixels zu identifizieren, auf das verwiesen wird, wobei das angewendete Interpolationsfilter von der Qualität des zuvor decodierten Bildes abhängig ist;

    wobei ein Interpolationsfilter für ein vorher decodiertes Bild höherer Qualität mehr Abgriffe als ein Interpolationsfilter für ein vorher decodiertes Bild niedrigerer Qualität aufweist, wobei das vorher decodierte Bild höherer Qualität von einer höheren Qualität als das vorher decodierte Bild niedrigerer Qualität ist.

10. Verfahren nach Anspruch 9, wobei die Qualität des vorher decodierten Bildes durch den Typ des vorher decodierten Bildes bestimmt wird.

11. Verfahren nach Anspruch 10, wobei der Typ des vorher decodierten Bildes eines von einem I-Bild, einem P-Bild und einem B-Bild ist.

12. Verfahren zur Decodierung eines codierten Videostroms, wobei das Verfahren umfasst:

Identifizieren eines Bewegungsvektors für ein aktuelles Bild, wobei der Bewegungsvektor auf ein vorher decodiertes Bild verweist;

Anwenden einer Maske, wobei die Maske einen Teilsatz von Subpixelpositionen des vorher decodierten Bildes definiert, auf welchen durch den Bewegungsvektor für das aktuelle Bild verwiesen werden kann; und Identifizieren mindestens eines Pixelwerts für das aktuelle Bild durch Verweisen auf den Wert mindestens eines Pixels in einer zulässigen Pixelposition des vorher decodierten Bildes;

wobei die Maske von der Qualität des vorher decodierten Bildes abhängig ist, derart dass eine Maske für ein vorher decodiertes Bild höherer Qualität mehr zulässige Subpixelpositionen als eine Maske für ein vorher decodiertes Bild niedrigerer Qualität aufweist, wobei das vorher decodierte Bild höherer Qualität von höherer Qualität als das vorher decodierte Bild niedrigerer Qualität ist.

13. Video-Decodiervorrichtung, umfassend:

einen Empfänger, der so ausgelegt ist, dass er einen Bewegungsvektors für ein aktuelles Bild empfängt, wobei der Bewegungsvektor auf ein vorher decodiertes Bild verweist;

einen Prozessor, der so ausgelegt ist, dass er eine Maske auf das vorher decodierte Bild anwendet, wobei die Maske einen Teilsatz von Subpixelpositionen des vorher decodierten Bildes zulässt, auf welchen durch den Bewegungsvektor für das aktuelle Bild verwiesen werden kann;

wobei der Prozessor ferner so ausgelegt ist, dass er mindestens einen Pixelwert für das aktuelle Bild durch Verweisen auf den Wert mindestens eines Pixels in einer zulässigen Pixelposition des vorher decodierten Bildes identifiziert;

wobei die Maske von der Qualität des vorher decodierten Bildes abhängig ist, derart dass eine Maske für ein vorher decodiertes Bild höherer Qualität mehr zulässige Subpixelpositionen als eine Maske für ein vorher decodiertes Bild niedrigerer Qualität aufweist, wobei das vorher decodierte Bild höherer Qualität von höherer Qualität als das vorher decodierte Bild niedrigerer Qualität ist.

14. Video-Codiervorrichtung, umfassend einen Prozessor, der ausgelegt ist zum:

Identifizieren eines Bewegungsvektors für ein aktuelles Bild, wobei der Bewegungsvektor auf ein vorher decodiertes Bild verweist;

Anwenden einer Maske auf das vorher decodierte Bild anwendet, wobei die Maske einen Teilsatz von Subpixelpositionen des vorher decodierten Bildes zulässt, auf welchen durch den Bewegungsvektor für das aktuelle Bild verwiesen werden kann;

Identifizieren mindestens eines Pixelwerts für das aktuelle Bild durch Verweisen auf den Wert mindestens eines Pixels in einer zulässigen Pixelposition des vorher decodierten Bildes;

wobei die Maske von der Qualität des vorher decodierten Bildes abhängig ist, derart dass eine Maske für ein vorher decodiertes Bild höherer Qualität mehr zulässige Subpixelpositionen als eine Maske für ein vorher decodiertes Bild niedrigerer Qualität aufweist, wobei das vorher decodierte Bild höherer Qualität von höherer Qualität als das vorher decodierte Bild niedrigerer Qualität ist.

15. Computerlesbares Medium, das Befehle trägt, welche bei Ausführung durch Computerlogik die Computerlogik veranlassen, eines der Verfahren nach Anspruch 1 bis 12 auszuführen.

**Revendications**

1. Procédé de décodage d'un flux vidéo codé, le procédé comprenant de :

recevoir un vecteur de mouvement pour une image actuelle, le vecteur de mouvement se référant à une image précédemment décodée ;

appliquer un masque, le masque définissant un sous-ensemble de positions de sous-pixel de l'image précédemment décodée qui peut être référence par le vecteur de mouvement ;

identifier au moins une valeur de pixel pour l'image actuelle référant à la valeur d'au moins un pixel dans une position de pixel autorisée de l'image précédemment décodée ;

dans lequel le masque est fonction de la qualité de l'image précédemment décodée de sorte qu'au masque pour une image de qualité supérieure précédemment décodée ait plus de positions de sous-pixel autorisées qu'un masque pour une image de qualité inférieure précédemment décidée, dans lequel l'image de qualité supérieure précédemment décodée est d'une qualité supérieure à l'image de qualité inférieure précédemment décodée.

**2.** Procédé selon la revendication 1, dans lequel la qualité est déterminée par le type d'image précédemment décodée.

**3.** Procédé selon la revendication 2, dans lequel le type d'image précédemment décodée est un d'une trame I, une trame P et une trame B.

**4.** Procédé selon une quelconque des revendications précédentes, dans lequel le masque indique aussi quelle position de pixel ou sous-pixel devrait être utilisée à la place d'une position de sous-pixel non autorisée.

**5.** Procédé selon une quelconque des revendications précédentes, dans lequel la valeur de sous-pixel dans l'image précédemment décodée à laquelle se réfère un vecteur de mouvement pour l'image actuelle est calculée en utilisant un filtre d'interpolation quand il est d'abord fait référence au sous-pixel par un vecteur de mouvement.

**6.** Procédé selon une quelconque des revendications précédentes, dans lequel l'identification d'au moins une valeur de pixel pour l'image actuelle est effectuée pour une valeur de pixel entier.

**7.** Procédé selon une quelconque des revendications précédentes, dans lequel le masque est fonction du paramètre de quantification de l'image précédemment décodée.

**8.** Procédé selon une quelconque des revendications précédentes, comprenant en outre d'appliquer un filtre d'interpolation à l'image précédemment décodée pour identifier une valeur d'au moins un sous-pixel auquel on se réfère, le filtre d'interpolation étant fonction de la qualité d'image précédemment décodée.

**9.** Procédé de décodage d'un flux vidéo codé, le procédé comprenant de :

recevoir un vecteur de mouvement pour une image actuelle, le vecteur de mouvement se référant à une image précédemment décodée ;
identifier au moins une valeur de pixel pour l'image actuelle en se référant à au moins un sous-pixel dans l'image précédemment décodée comme indiqué par le vecteur de mouvement ;
appliquer un filtre d'interpolation à l'image précédemment décodée pour identifier une valeur d'au moins un sous-pixel auquel on se réfère, dans lequel le filtre d'interpolation appliqué est fonction de la qualité d'image précédemment décodée ;
dans lequel un filtre d'interpolation pour une image de qualité supérieure décodée précédemment a plus de prises qu'un filtre d'interpolation pour une image de qualité inférieure décodée précédemment, dans lequel l'image de qualité supérieure décodée précédemment est de qualité supérieure à l'image de qualité inférieure décodée précédemment.

**10.** Procédé selon la revendication 9, dans lequel la qualité de l'image précédemment décodée est déterminée par le type d'image précédemment décodée.

**11.** Procédé selon la revendication 10, dans lequel le type d'image précédemment décodée est un d'une trame I, une trame P et une trame B.

**12.** Procédé de codage d'un flux vidéo, le procédé comprenant de :

identifier un vecteur de mouvement pour une image actuelle, le vecteur de mouvement se référant à une image précédemment codée ;
appliquer un masque, le masque définissant un sous-ensemble de positions de sous-pixel de l'image précédemment décodée auquel le vecteur de mouvement pour l'image actuel peut faire référence ; et
identifier au moins une valeur de pixel pour l'image actuelle en se référant à la valeur d'au moins un pixel dans une position de pixel autorisée de l'image précédemment décodée ;
dans lequel le masque est fonction de la qualité de l'image précédemment décodée de sorte qu'un masque pour une image précédemment décodée de qualité supérieure ait plus de positions de sous-pixel autorisées qu'un masque pour une image précédemment décodée de qualité inférieure, dans lequel l'image de qualité supérieure précédemment décodée est d'une qualité supérieure à l'image de qualité inférieure précédemment décodée.

**13.** Dispositif de décodage vidéo comprenant :

un récepteur agencé pour recevoir un vecteur de mouvement pour une image actuelle, le vecteur de mouvement se référant à une image précédemment décodée ;

un processeur agencé pour appliquer un masque à l'image précédemment décodée, le masque autorisant un sous-ensemble de positions de sous-pixel de l'image précédemment décodée qui peut être référencé par le vecteur de mouvement pour l'image actuelle ;

dans lequel le processeur est en outre agencé pour identifier au moins une valeur de pixel pour l'image actuelle en se référant à la valeur d'au moins un pixel dans une position de pixel autorisée de l'image précédemment décodée ;

dans lequel le masque est fonction de la qualité de l'image précédemment décodée de sorte qu'un masque pour une image de qualité supérieure précédemment décodée ait plus de positions de sous-pixel autorisées qu'un masque pour une image de qualité inférieure précédemment décodée, dans lequel l'image de qualité supérieure précédemment décodée est d'une qualité supérieure à l'image de qualité inférieure précédemment décodée.

**14.** Dispositif de codage vidéo comprenant un processeur agencé pour :

identifier un vecteur de mouvement pour une image actuelle, le vecteur de mouvement se référant à une image précédemment codée ;

appliquer un masque à l'image précédemment décodée, le masque autorisant un sous-ensemble de positions de sous-pixel de l'image précédemment décodée qui peut être référencé par le vecteur de mouvement pour l'image actuelle ; et

identifier au moins une valeur de pixel pour l'image actuelle en se référant à la valeur d'au moins un pixel dans une position de pixel autorisée de l'image précédemment décodée ;

dans lequel le masque est fonction de la qualité de l'image précédemment décodée de sorte qu'un masque pour une image de qualité supérieure précédemment décodée ait plus de positions de sous-pixel autorisées qu'un masque pour une image de qualité inférieure précédemment décodée, dans lequel l'image précédemment décodée de qualité supérieure est d'une qualité supérieure à l'image précédemment décodée de qualité inférieure.

**15.** Support lisible par ordinateur, portant des instructions, qui, quand elles sont exécutées par une logique informatique, amènent ladite logique informatique à mettre en oeuvre un quelconque des procédés définis par les revendications 1 à 12.

100

| A | | | B | | | C | a | b | c | D | | | E | | | F |
|---|---|---|---|---|---|---|---|---|---|---|---|---|---|---|---|---|
| | | | | | | | d | e | f | g | | | | | | |
| | | | | | | | h | i | j | k | | | | | | |
| | | | | | | | l | m | n | o | | | | | | |
| G | | | H | | | I | | | | J | | | K | | | L |

Fig. 1
*(Prior art)*

210
Source

260
Device

225
Processor

220
Encoder

250
Decoder

255
Processor

230
Transmitter → Transmission → 240
Receiver

Fig. 2

Fig. 3

Fig. 4

520         521         522

Fig. 5

```
┌─────────────────────────────┐
│                         610 │
│   Receive indication of     │
│       Motion Vector         │
└─────────────────────────────┘
              │
              ▼
┌─────────────────────────────┐
│                         620 │
│   Refer to reference picture│
└─────────────────────────────┘
              │
              ▼
          ╱───────╲
        ╱    630    ╲
      ╱  Is referenced ╲        N      ┌──────────────┐
     ╲  pixel position  ╱──────────────│          650 │
      ╲   allowed?    ╱                │  Refer instead│
        ╲          ╱                   │  to relevant  │
          ╲──────╱                     │ allowed pixel │
             │ Y                       │   position    │
             │                         └──────────────┘
             │                                │
             ▼           ▼                    │
┌─────────────────────────────┐
│                         640 │
│     Identify pixel value    │
└─────────────────────────────┘
```

Fig. 6